(19) Europäisches Patentamt
European Patent Office
Office européen des brevets

(11) EP 3 107 922 B1

(12) **EUROPÄISCHE PATENTSCHRIFT**

(45) Veröffentlichungstag und Bekanntmachung des Hinweises auf die Patenterteilung:
**25.04.2018 Patentblatt 2018/17**

(21) Anmeldenummer: **15705580.7**

(22) Anmeldetag: **13.02.2015**

(51) Int Cl.:
***C07F 9/06*** *(2006.01)* ***C08G 18/79*** *(2006.01)*
***C08G 18/02*** *(2006.01)* ***C08G 18/18*** *(2006.01)*

(86) Internationale Anmeldenummer:
**PCT/EP2015/053085**

(87) Internationale Veröffentlichungsnummer:
**WO 2015/124503 (27.08.2015 Gazette 2015/34)**

(54) **VERFAHREN ZUR ISOCYANATMODIFIZIERUNG UNTER VERWENDUNG VON KATALYSATOREN MIT N-P-N-SEQUENZ**

PROCESS FOR THE OLIGO- OR POLYMERISATION OF ISOCYANATES USING CATALYSTS HAVING N-P-N SEQUENCES

PROCÉDÉ POUR LA POLYMÉRISATION D'ISOCYANATES UTILISANT DE CATALYSEURS AYANT DES SÉQUENCES N-P-N

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2014 EP 14155524**

(43) Veröffentlichungstag der Anmeldung:
**28.12.2016 Patentblatt 2016/52**

(73) Patentinhaber: **Covestro Deutschland AG**
**51373 Leverkusen (DE)**

(72) Erfinder: **RICHTER, Frank**
**51373 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 2 415 795 US-A1- 2006 241 300**

- **REINHARD SCHWESINGER ET AL: "Anhydrous Phosphazenium Fluorides as Sources for Extremely Reactive Fluoride Ions in Solution", CHEMISTRY - A EUROPEAN JOURNAL, Bd. 12, Nr. 2, 1. Januar 2006 (2006-01-01) , Seiten 438-445, XP055107894, ISSN: 0947-6539, DOI: 10.1002/chem.200500838**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 107 922 B1

## Beschreibung

Die Erfindung betrifft ein Verfahren zur Modifizierung von Isocyanaten, bei dem mindestens ein monomeres organisches Isocyanat mit einer NCO-Funktionalität > 1 in Gegenwart mindestens eines Katalysators oligomerisiert wird, sowie die Verwendung eines derartigen Katalysators.

Die Oligo- bzw. Polymerisierung von Isocyanaten insbesondere unter Bildung von höhermolekularen Oligomerengemischen mit Uredion- ("Dimer"), Isocyanurat- ("Trimer") und/oder Iminooxadiazindionstrukturen ("asymmetrisches Trimer") im Molekülgerüst, hier zusammenfassend Isocyanatmodifizierung genannt, ist seit langem bekannt. Enthalten die modifizierten Polyisocyanate freie NCO-Gruppen, die ggf. auch mit Blockierungsmitteln vorübergehend desaktiviert worden sein können, sind sie außerordentlich hochwertige Ausgangsstoffe für die Herstellung einer Vielzahl von Polyurethan-Kunststoffen und Beschichtungsmitteln.

Es haben sich eine Reihe technischer Verfahren zur Isocyanatmodifizierung etabliert, wobei man in der Regel das zu modifizierende Isocyanat, meist ein Diisocyanat, durch Zusatz von Katalysatoren umsetzt und diese anschließend, wenn der gewünschte Umsatzgrad des zu modifizierenden Isocyanates erreicht ist, durch geeignete Maßnahmen unwirksam macht (deaktiviert) und das erhaltene Polyisocyanat in der Regel vom nicht umgesetzten Monomer abtrennt. Eine Zusammenstellung dieser Verfahren des Standes der Technik findet sich in H. J. Laas et al., J. Prakt. Chem. 1994, 336, 185 ff.

Als Modifizierungskatalysatoren haben sich Neutralbasen und ionisch aufgebaute Verbindungen bewährt. Letztere können meist in sehr geringer Menge eingesetzt werden und führen äußerst schnell zum gewünschten Ergebnis. Bei den Neutralbasen ist das abhängig vom umzusetzenden Monomer und verwendeter Neutralbase nicht immer so, Struktur-Wirkungs- bzw. - Aktiviätsbeziehungen abzuleiten ist allerdings nahezu unmöglich (vgl. Chem. Eur. J. 2009, 15, 5200 - 5202).

Die Möglichkeit, als Kation zum gegenüber Isocyanaten katalytisch aktiven Anion wie Hydroxid, Alkanoat, Alkoxylat etc. auch Tetraorganylammonium oder -phosphonium zu verwenden, ist allgemein bekannt, wenngleich in der Regel nicht explizit als besonders bevorzugt herausgehoben, vgl.: H. J. Laas et al., J. Prakt. Chem. 1994, 336, 185 ff.

Weiterhin ist die Verwendung von Fluoriden und Hydrogenpolyfluoriden, letztere sind stabile Addukte von HF an Fluorid-Ionen enthaltenden Verbindungen, optional auch in Form ihrer Ammonium- oder Phosphoniumsalze, für die Isocyanatmodifizierung unter anderem bekannt aus EP 962 455 A1, EP 962 454 A1, EP 896 009 A1, EP 798 299 A1, EP 447 074 A1, EP 379 914 A1, EP 339 396 A1, EP 315 692 A1, EP 295 926 A1 sowie EP 235 388 A1.

Allerdings weisen die Tetraorganylammonium und -phosphonium (Hydrogenpoly)fluoride des Standes der Technik bei der Durchführung der Modifizierungsreaktion oftmals den Nachteil auf, dass bei ihrer Verwendung die Reaktion mitunter nur durch kontinuierliche Katatalysatordosierung aufrecht zu erhalten ist, d.h. dass die Zersetzung des Katalysators im Isocyanatmilieu im Vergleich zur Modifizierungsreaktion technisch unakzeptabel schnell abläuft.

Dieser Nachteil wird auch nicht immer durch Zugabe von Aminosilanen zu Fluorid-Ionen aufweisenden Substanzen in zufriedenstellender Weise beseitigt, wie in EP 1 318 160 A1 beschrieben ist. Möglicherweise sind die dort als Fluoridquelle beschriebenen Verbindungen ohne Zusatz von Aminosilanen inaktiv bzw. weisen keine für die Isocyanattrimerisierung ausreichende Aktivität auf.

US 5,260,436 B offenbart die katalysierte Umsetzung aromatischer Isocyanate mit speziellen, P-N-Bindungen aufweisenden, bicyclischen Basen (sog. Phosphatranen) zu Isocyanuraten. In J. Org. Chem. 2010, 75, 5308-5311 wird allerdings explizit darauf verweisen, dass die entsprechende Reaktion mit aliphatischen Isocyanaten nicht stattfindet.

Nach der Lehre der CN 102964566 sind asymmetrisch-Trimer-haltige Produkte zugänglich, wobei die Aktivität der Katalysatoren für eine technische Durchführung des Verfahrens in der Regel unakzeptabel niedrig ist und äußerst schnell Katalysatorzersetzung unter Bildung karzinogener Phosphorsäureamide, z.B. HMPT, eintritt. Dies ist im Vergleichsbeispiel 5 der vorliegenden Anmeldung belegt. Darüber hinaus sind die Verfahrensprodukte der CN 102964566 - im Gegensatz zu anders lautenden Angaben in zitierter Schrift - stark mit störenden Nebenprodukten verunreinigt, insbesondere mit Uretoniminen.

EP 2 415 795 A1 beschreibt sehr stabile Tetraorganylphosphonium (Hydrogenpoly)fluoride, die diese Nachteile nicht aufweisen, allerdings kommerziell nicht verfügbar und nur aufwendig herzustellen sind.

Der Erfindung lag die Aufgabe zugrunde, ein verbessertes Verfahren zur Isocyanatmodifizierung zur Verfügung zu stellen, bei dem kommerziell gut zugängliche oder aus preiswerten Edukten leicht herstellbare Verbindungen als Katalysatoren eingesetzt werden, die eine hohe katalytische Aktivität und Selektivität bei gleichzeitig guter Katalysatorstabilität aufweisen.

Diese Aufgabe wird gelöst durch ein Verfahren zur Modifizierung von Isocyanaten, bei dem mindestens ein monomeres organisches Isocyanat mit einer NCO-Funktionalität > 1 in Gegenwart mindestens eines Katalysators oligomerisiert wird, wobei das Verfahren dadurch gekennzeichnet ist, dass der Katalysator mindestens eine Verbindung mit N-P-N-Sequenz umfasst, die ausgewählt ist aus Verbindungen der Formel I

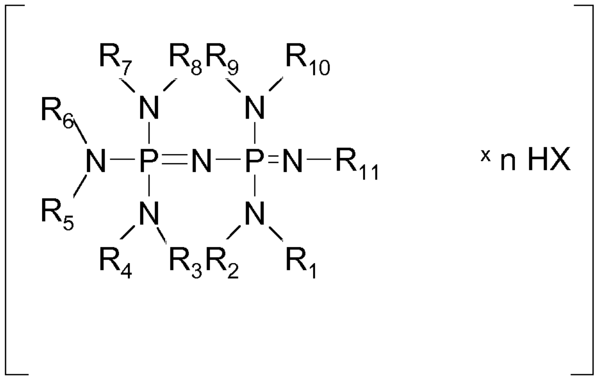

(Formel I),

und/ oder Verbindungen der Formel II

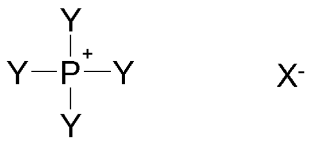

(Formel II)

worin HX für eine Säure mit einem pKs-Wert ≥ 2, $X^-$ für das Anion einer Säure mit einem pKs-Wert ≥ 2 und n für eine ganze oder gebrochene Zahl von 0 bis 20 steht,

worin Y für $R_{12}(R_{13})N$- und/oder einen oder mehrere Substituenten der Struktur der Formel III steht

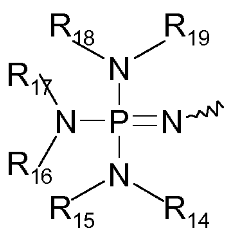

(Formel III)

und

wobei $R_1$ bis $R_{19}$ unabhängig voneinander für gleiche oder verschiedene Substituenten ausgewählt aus $C_1$-$C_{20}$-Alkyl-, $C_1$-$C_{20}$-Cycloalkyl- und $C_6$-$C_{20}$ Arylgruppen stehen oder

wobei $R_1$ und $R_2$, $R_3$ und $R_4$, $R_5$ und $R_6$, $R_7$ und $R_8$, $R_9$ und $R_{10}$, $R_{12}$ und $R_{13}$, $R_{14}$ und $R_{15}$, $R_{16}$ und $R_{17}$, $R_{18}$ und $R_{19}$ unabhängig voneinander für gleiche oder verschiedene Substituenten ausgewählt aus $C_1$-$C_{20}$-Alkylen-, $C_1$-$C_{20}$-Cycloalkylen-, $C_6$-$C_{20}$ Arylengruppen stehen und mit dem P-gebundenen N-Atom einen 3 bis 12-gliedrigen Ring bilden können.

Mit dem erfindungsgemäßen Modifizierverfahren ist ganz allgemein eine breite Palette qualitativ hochwertiger und deshalb für den Polyurethansektor sehr wertvoller Polyisocyanate in einfacher Weise zugänglich. Abhängig vom verwendeten Ausgangs(di)isocyanat und den Reaktionsbedingungen entstehen beim erfindungsgemäßen Verfahren

Polyisocyanate vom sog. Isocyanat-Trimertyp (d.h. enthaltend Isocyanurat- und/oder Iminooxadiazindionstrukturen) mit geringem Anteil an Uretdiongruppen ("Isocyanat-Dimere"). Bei steigender Reaktionstemperatur steigt der Anteil letzterer in den Verfahrensprodukten in der Regel an.

Im Rahmen der vorliegenden Erfindung bedeutet N-P-N-Sequenz, dass die Verbindung eine Atomfolge Stickstoff-Phosphor-Stickstoff aufweist, wobei zwischen diesen Atomen Einfach- oder auch Mehrfachbindungen vorliegen können. Auch kann eines oder auch mehrere Atome dieser Sequenz eine positive oder negative Ladung tragen.

Bei dem erfindungsgemäßen Verfahren kann der 3-12-gliedrige Ring wenigstens ein Heteroatom, ausgewählt aus N, O und S enthalten und/ oder einen Substituenten mit einem solchen Heteroatom.

$X^-$ kann beispielsweise für $OH^-$, $F^-$ oder das Anion von Alkoholen, Phenolen und Alkansäuren stehen. Analog kann HX für $H_2O$, HF oder einen Alkohol, ein Phenol oder eine Alkansäure stehen. Die Säure HX beziehungsweise die zum Anion $X^-$ gehörige Säure kann insbesondere einen pKs-Wert $\geq 2{,}5$ aufweisen, vorzugsweise $\geq 3{,}0$ oder gar $\geq 3{,}10$.

In vorteilhafter Ausgestaltung des erfindungsgemäßen Verfahrens steht n für eine ganze oder gebrochene Zahl von 1 bis 10.

Bei dem erfindungsgemäßen Verfahren kann weiter vorgesehen sein, dass die Oligomerisierung unter Anwesenheit eines Lösungsmittels und/ oder Additivs durchgeführt wird.

Zur Durchführung des erfindungsgemäßen Verfahrens können prinzipiell alle bekannten monomeren Mono-, Di- oder Polyisocyanate des Standes der Technik einzeln oder in beliebigen Mischungen untereinander eingesetzt werden. Beispielhaft seien genannt: Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI), 2,4- sowie 2,6-Toluylendiisocyanat (TDI), Bis(4-isocyanatophenyl)methan (4,4'MDI), 4-Isocyanatophenyl-2-isocyanatophenylmethan (2,4'MDI) sowie mehrkernige Produkte, die durch Formaldehyd-Anilin-Polykondensation und anschließende Überführung der resultierenden (Poly)amine in die entsprechenden (Poly)isocyanate zugänglich sind (Polymer-MDI).

Bevorzugt sind monomere aliphatische Diisocyanate. d.h. Diisocyanate bei denen beide NCO-Gruppen an ein $sp^3$-hybridisiertes Kohlenstoffatom gebunden sind. Besonders bevorzugt sind Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI).

Für die vorliegende Erfindung können sämtliche der vorgenannten Isocyanate eingesetzt werden, unabhängig davon, nach welchen Verfahren diese hergestellt wurden, also ob sie beispielsweise mit oder ohne Verwendung von Phosgen erzeugt wurden.

Die Menge des im erfindungsgemäßen Verfahren einzusetzenden Katalysators richtet sich in erster Linie nach dem verwendeten Isocyanat und der angestrebten Reaktionsgeschwindigkeit und liegt vorzugsweise bei 0,001 bis 5 mol-%, bezogen auf die Summe der Stoffmengen des eingesetzten monomeren Isocyanates und des Katalysators. Weiter bevorzugt werden 0,002 bis 2 mol-% Katalysator eingesetzt.

Der Katalysator kann im erfindungsgemäßen Verfahren unverdünnt oder in Lösungsmitteln gelöst eingesetzt werden. Als Lösungsmittel kommen dabei alle Verbindungen in Frage, die nicht mit dem Katalysator reagieren und ihn in ausreichendem Maße zu lösen vermögen, z.B. aliphatische oder aromatische Kohlenwasserstoffe, Alkohole, Ester sowie Ether. Bevorzugt werden Alkohole verwendet.

Das erfindungsgemäße Verfahren kann im Temperaturbereich von 0 °C bis + 250 °C, bevorzugt 20 bis 180 °C, besonders bevorzugt 40 bis 150 °C erfolgen und bei beliebigen Umsetzungsgraden, bevorzugt nachdem 5 bis 80 %, besonders bevorzugt 10 bis 60 %, des eingesetzten monomeren Isocyanates umgesetzt wurden, unterbrochen werden.

Zur Katalysatordeaktivierung bieten sich prinzipiell eine ganze Reihe vorbeschriebener Methoden des Standes der Technik an, wie z.B. die Zugabe (unter- oder über-) stöchiometrischer Mengen an starken Säuren oder Säurederivaten (z.B. Benzoylchlorid, saure Ester Phosphor oder Schwefel enthaltender Säuren, diese Säuren selbst etc., nicht jedoch HF), adsorptive Bindung des Katalysators und anschließende Abtrennung durch Filtration und andere dem Fachmann bekannte Methoden.

Verglichen mit der Katalyse durch Katalysatoren auf Basis einfacher quaternärer Phosphoniumsalze, z.B. solcher mit Tetra-n-butylphosphoniumkation (s. Vergleichsbeispiele 1a bis 1d), beobachtet man im erfindungsgemäßen Verfahren bei sonst gleichen Reaktionsbedingungen eine deutlich verbesserte Katalysatorstandzeit die mit Temperatursteigerung nicht so stark abfällt, wie bei den o.g. Verbindungen des Standes der Technik. Dies wird in den Beispielen und Vergleichsbeispielen durch die Turnover Frequenz (TOF) illustriert. Letztere ist bezogen auf die Stoffmenge der in der Oligomerisierung umgesetzten NCO-Gruppen A, die Stoffmenge an dafür nötigem Katalysator B und die Reaktionszeit t (gemessen in Sekunden) gemäß folgender Gleichung definiert:

$$TOF = A*(B*t)^{-1} [mol*(mol*sec)^{-1}] .$$

Nach einer besonderen, kontinuierlich arbeitenden Ausführungsform des erfindungsgemäßen Verfahrens kann die Oligomerisierung in einem Rohrreaktor vorgenommen werden.

Besonders überraschend ist, dass Neutralbasen mit mindestens einer N-P-N-P-N-Einheit wie z.B. $(Me_2N)_3P=N-P(NMe_2)_2=NEt$ oder $(Me_2N)_3P=N-P(NMe_2)_2=N^tBu$ keinerlei Zersetzungstendenzen im Isocyanatmedium aufweisen wie ihre um eine $=(R_2N)_2P$-Einheit ärmeren Pendants (vgl. CN 102964566 und Vergleichsbeispiel 5) und selbst die äußerst einfach herzustellenden HX-Addukte an diese Neutralbasen (zur Bedeutung von X s. weiter oben im Text) katalytisch aktiv sind. Addukte schwacher Säuren wie HF, Essigsäure und Pivalinsäure an Katalysator-Neutralbasen wie Tributylphosphin, Pyridin, Tributylamin sowie die P1-Basen der CN 102964566, deren - wenngleich mitunter sehr geringe - Aktivität für die Isocyanatmodifizierung bekannt ist, sind es nicht (Vergleichsbeispiel 6). In einer besonders bevorzugten Ausgestaltung des erfindungsgemäßen Verfahrens ist deshalb die Verbindung mit N-P-N-P-N-Sequenz ausgewählt aus Verbindungen der Formel $(Me_2N)_3P=N-P(NMe_2)_2=NR_{20}$ wobei $R_{20}$ die gleiche Bedeutung zukommt wie $R_{11}$, insbesondere $(Me_2N)_3P=N-P(NMe_2)_2=NEt$, $(Me_2N)_3P=N-P(NMe_2)_2=N^tBu$, oder Mischungen davon und ihren HX-Addukten, wobei HX insbesondere ausgewählt ist aus HF.

In weiterer Ausgestaltung des erfindungsgemäßen Verfahrens entspricht das Kation der Verbindung mit N-P-N-Sequenz gemäß Formel II der folgenden Formel IV

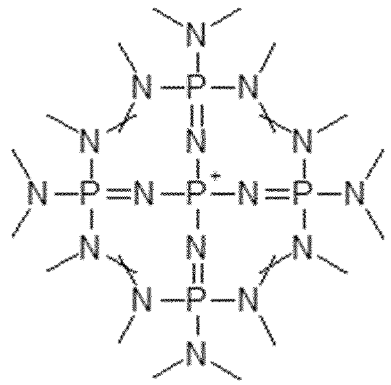

(Formel IV),

wobei $X^-$ insbesondere ausgewählt ist aus $F^-$, $HF_2^-$, $H_2F_3^-$ oder Mischungen von diesen. In Formel IV sind also die endständigen Aminogruppen Dimethylamino-Gruppen gemäß der folgenden Formel V:

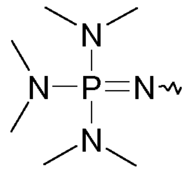

(Formel V)

Die IUPAC-Bezeichnung des Kations der Formel IV lautet 1,1,1,5,5,5-Hexakis(dimethylamino)-3,3-bis{[tris(dimethylamino)-lambda$^5$-phosphanyliden]amino}-1lambda$^5$,5lambda$^5$-triphosphaza-1,4-dien-3-ium.

Ganz besonders bevorzugt umfasst der Katalysator die folgende Verbindung der Formel VI oder besteht daraus, das heißt aus einer Verbindung mit dem Kation der Formel IV und Fluorid als Anion sowie dessen HF-Addukten (Difluoriden, Trifluoriden etc.):

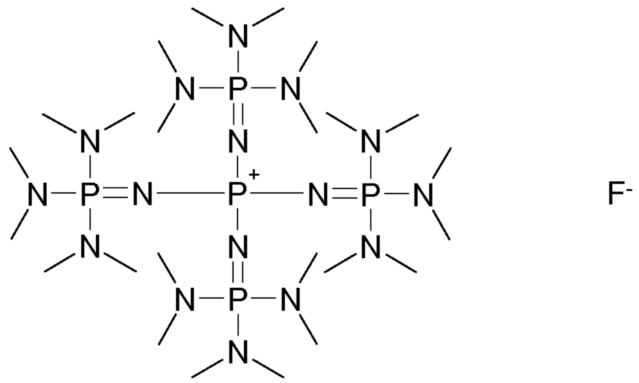

(Formel VI)

Ganz allgemein beobachtet man mit steigendem HF-Anteil in den erfindungsgemäßen Addukten eine ansteigende Selektivität bzgl. der Bildung von asymm. Trimeren (Iminooxadiazindionen) während O-haltige Anionen zur nahezu ausschließlichen Bildung von Isocyanuraten führen.

Die nach dem erfindungsgemäßen Verfahren erhältlichen Produkte bzw. Produktgemische stellen mithin vielseitig verwendbare Ausgangsmaterialien zur Herstellung von, ggf. geschäumte(n), Kunststoffe(n) sowie Lacken, Beschichtungsmitteln, Klebstoffen und Zuschlagstoffen dar. Insbesondere zur Herstellung von, ggf. wasserdipergierbaren Ein- und Zweikomponenten-Polyurethanlacken eignen sie sich, ggf. in NCO-blockierter Form, aufgrund ihrer im Vergleich zu (überwiegend) Isocyanurat-Polyisocyanat basierenden Produkten verringerten Lösungs- sowie Schmelzviskosität bei ansonsten gleich hohem bzw. verbessertem Eigenschaftsprofil. So sind die erfindungsgemäßen Verfahrensprodukte auf HDI-Basis auch in hoher Verdünnung in Lacklösungsmitteln stabiler gegen das Auftreten von Ausflockungen bzw. Trübungen, als entsprechende Produkte des Standes der Technik.

Die erfindungsgemäßen Verfahrensprodukte können als solche oder in Verbindung mit anderen Isocyanatderivaten des Standes der Technik, wie z.B. Uretdion-, Biuret-, Allophanat-, Isocyanurat- und/oder Urethan-Gruppen enthaltenden Polyisocyanaten, deren freie NCO-Gruppen ggf. mit Blockierungsmitteln desaktiviert wurden, eingesetzt werden.

Ein weiterer Gegenstand der vorliegenden Erfindung ist gerichtet auf die Verwendung eines Katalysators, der eine Verbindung mit N-P-N-Sequenz umfasst, die ausgewählt ist aus Verbindungen der Formel I

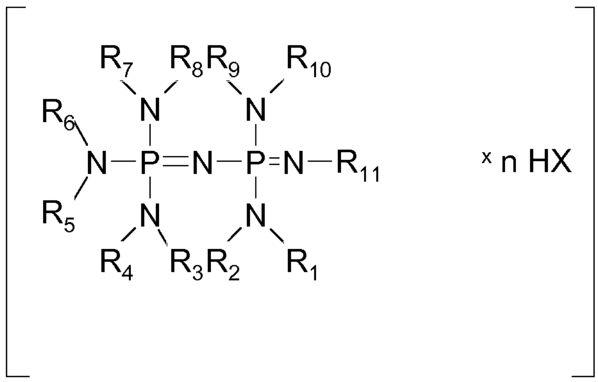

(Formel I),

und/ oder Verbindungen der Formel II

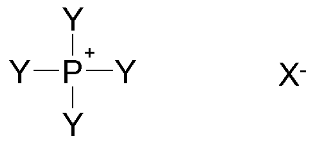

(Formel II)

worin HX für eine Säure mit einem pKs-Wert ≥ 2, $X^-$ für das Anion einer Säure mit einem pKs-Wert ≥ 2 und n für eine ganze oder gebrochene Zahl von 0 bis 20 steht,

worin Y für $R_{12}(R_{13})N$- und/oder einem oder mehreren Substituenten der Struktur der Formel III steht

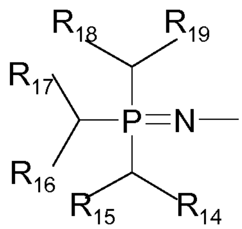

(Formel III)

und

wobei $R_1$ bis $R_{19}$ unabhängig voneinander für gleiche oder verschiedene Substituenten ausgewählt aus $C_1$-$C_{20}$-Alkyl-, $C_1$-$C_{20}$-Cycloalkyl- und $C_6$-$C_{20}$ Arylgruppen stehen oder

wobei $R_1$ und $R_2$, $R_3$ und $R_4$, $R_5$ und $R_6$, $R_7$ und $R_8$, $R_9$ und $R_{10}$, $R_{12}$ und $R_{13}$, $R_{14}$ und $R_{15}$, $R_{16}$ und $R_{17}$, $R_{18}$ und $R_{19}$ unabhängig voneinander für gleiche oder verschiedene Substituenten ausgewählt aus $C_1$-$C_{20}$-Alkylen-, $C_1$-$C_{20}$-Cycloalkylen-, $C_6$-$C_{20}$ Arylengruppen stehen und mit dem P-gebundenen N-Atom einen 3 bis 12-gliedrigen Ring bilden können,

zur Oligomerisierung von monomeren organischen Isocyanaten mit einer NCO-Funktionalität > 1.

Die vorliegende Erfindung wird im Folgenden anhand von Beispielen und Vergleichsbeispielen näher erläutert, ohne sie jedoch auf diese einzuschränken.

**Beispiele:**

Alle Prozentangaben sind, soweit nicht anders vermerkt, als Gewichtsprozent zu verstehen.

Aussagen zur strukturellen Produktzusammensetzung wurden NMR-spektroskopisch ermittelt. Die Messungen erfolgten auf den Geräten DPX 400 bzw. DRX 700 der Fa. Brucker an ca. 5 %igen ($^1$H-NMR) bzw. ca. 50 %igen ($^{13}$C-NMR) Proben in trockenem $C_6D_6$ bei einer Frequenz von 400 bzw. 700 MHz ($^1$H-NMR) oder 100 bzw. 176 MHz ($^{13}$C-NMR). Als Referenz für die ppm-Skale wurden geringe Mengen von Tetramethylsilan im Lösungsmittel mit 0 ppm $^1$H-NMR-chem. Verschiebung heran gezogen. Alternativ wurde auf das Signal des im Lösungsmittel enthaltenen $C_6D_5H$ referenziert: 7,15 ppm $^1$H-NMR-chem. Verschiebung, 128,02 ppm $^{13}$C-NMR-chem. Verschiebung.. Daten für die chemische Verschiebung der in Frage kommenden Verbindungen wurden der Literatur entnommen (vgl. D. Wendisch, H. Reiff und D. Dieterich, Die Angewandte Makromolekulare Chemie 141, 1986, 173-183 und darin zit. Lit sowie EP-A 896 009.

Die Bestimmung der Restmonomergehalte erfolgte gaschromatographisch auf dem Gerät 6890 N Network GC System der Firma Agilent Technologies.

Der Phosphorgehalt aller Proben wurde durch Röntgenfluoreszenzanalyse (RFA) auf dem Gerät S8 Tiger der Firma Bruker AXS ohne vorherigen Aufschluss (Direktmessung) bestimmt.

Alle Reaktionen wurden, wenn nicht anders angegeben, unter einer Stickstoffatmosphäre durchgeführt.

Die verwendeten Diisocyanate sind Produkte der Bayer MaterialScience AG, D-51368 Leverkusen, alle anderen kommerziell zugänglichen Chemikalien wurden von der Fa. Aldrich, D-82018 Taufkirchen, bezogen.
Die nicht kommerziell erhältlichen Katalysatoren wurden nach literaturbekannten Methoden (Chem. Eur. J. 2006, 12, 429-437 und darin zit. Lit.) gewonnen.
Die Turnover Frequenz (TOF) ist nach der folgenden Gleichung definiert:

$$TOF = A*(B*t)^{-1} [mol*(mol*sec)^{-1}] .$$

Darin wird die Stoffmenge der in der Oligomerisierung umgesetzten NCO-Gruppen A bestimmt durch Titration gemäß DIN 53 185.
B beschreibt die für die Oligomerisierung eingesetzte Stoffmenge an Katalysator B, die sich aus der Einwaage errechnet.
T bezeichnet die Reaktionsgeschwindigkeit in Sekunden.

**Beispiele 1a bis 1d - Vergleichsbeispiele**

1a) Katalysator: Tetra-n-butylphosphonium hydroxid, 0,8%ig in iso-Propanol

1b) Katalysator: Tetra-n-butylphosphonium(hydrogen)difluorid, 70%ig in iso-Propanol

1c) Katalysator: Tetra-n-butylphosphonium acetat, 22%ig in 2-Ethylhexanol

1d) Katalysator: Tetra-n-butylphosphonium pivalat, 23%ig in 2-Ethylhexanol

In einem doppelwandigen, durch einen externen Kreislauf auf die jeweils gewünschte Starttemperatur temperierten Planschliffgefäß mit Rührer, an eine Inertgasanlage (Stickstoff/Vakuum) angeschlossenem Rückflusskühler und Thermometer wurden 1000 g HDI vorgelegt und durch einstündiges Rühren im Vakuum (< 1 mbar) von gelösten Gasen befreit. Nach Belüften mit Stickstoff wurde die in Tabelle 1 angegebene Katalysatormenge so dosiert, dass die in Tabelle 1 angegebene Maximaltemperatur nicht überschritten wurde. Nachdem ca. 1 mol NCO Gruppen umgesetzt waren, indiziert durch Erreichen eines Brechungsindex' (gemessen bei 20°C; $n_D^{20}$) zwischen 1,4600 und 1,4620, wurde der Katalysator durch Zugabe einer zum Katalysator äquivalenten Menge an p-Toluolsulfonsäure (als ca. 50%ige Lösung in Isopropanol) deaktiviert, weitere 30 min bei Reaktionstemperatur nachgerührt und anschließend aufgearbeitet. Die Zeit zwischen erster Katalysatorzugabe und Zugabe der Toluolsulfonsäurelösung wurde zur Berechnung der in Tabelle 1 angegebenen TOF (Definition s. weiter oben im Text) herangezogen. Wurden mehrere Versuche bei gleicher Reaktionstemperatur durchgeführt, wurde im jeweils ersten Versuch der Katalysator langsamer und z.T. auch diskontinuierlich dosiert, um die optimale Menge für den Nachfolgeversuch zu ermitteln. Bei diesem wurde der Katalysator zügiger dosiert bzw. es wurde bereits nach Zugabe von weniger Katalysator und/oder nach kürzerer Zeit der Zielumsatz erreicht, was zu höheren TOF-Werten führt.
Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,08 +/- 0,04 mbar, VV-Temperatur: 120°C, HV-Temp.: 140°C), wobei nicht umgesetztes Monomer als Destillat und das monomerenarme Polyisocyanatharz als Sumpfprodukt separiert wurden (Startdurchlauf). Das Polyisocyanatharz wurde separiert und das Destillat in einer zweiten Planschliff-Rührapparatur, die identisch zur ersten aufgebaut ist, gesammelt und mit frisch entgastem HDI auf die Ausgangsmenge (1000 g) aufgefüllt. Anschließend wurde erneut katalysiert und verfahren wie eingangs beschrieben. Diese Verfahrensweise wurde unter Variation der Reaktionstemperatur mehrmals wiederholt. Die Ergebnisse sind Tabelle 1 zu entnehmen.

Tabelle 1

| Beispiel | | Katalysator- | | | $n_D^{20}$ bei Stopperzugabe | Reaktionstemperatur [°C] | | TOF |
|---|---|---|---|---|---|---|---|---|
| Nr. | | Kation | Anion | Menge [g] | | Start | Max. | |
| 1a- | A | n-$Bu_4P^+$ | $OH^-$ | 13,1 | 1,4603 | 60 | 63 | 0,21 |

(fortgesetzt)

| Beispiel | | Katalysator- | | | $n_D^{20}$ bei Stopperzugabe | Reaktionstemperatur [°C] | | TOF |
|---|---|---|---|---|---|---|---|---|
| Nr. | | Kation | Anion | Menge [g] | | Start | Max. | |
| 1a- | B | n-$Bu_4P^+$ | $OH^-$ | 10,8 | 1,4605 | 60 | 62 | 0,76 |
| 1a- | C | n-$Bu_4P^+$ | $OH^-$ | 27,6 | 1,4617 | 80 | 83 | 0,31 |
| 1a- | D | n-$Bu_4P^+$ | $OH^-$ | 26,5 | 1,4609 | 80 | 84 | 0,70 |
| 1a- | E | n-$Bu_4P^+$ | $OH^-$ | 61,9 | 1,4611 | 100 | 103 | 0,12 |
| 1a- | F | n-$Bu_4P^+$ | $OH^-$ | 46,7 | 1,4610 | 100 | 102 | 0,25 |
| 1b- | A | n-$Bu_4P^+$ | $[HF_2]^-$ | 0,4 | 1,4601 | 60 | 62 | 1,3 |
| 1b- | B | n-$Bu_4P^+$ | $[HF_2]^-$ | 0,3 | 1,4600 | 60 | 63 | 1,3 |
| 1b- | C | n-$Bu_4P^+$ | $[HF_2]^-$ | 0,5 | 1,4600 | 80 | 84 | 0,5 |
| 1b- | D | n-$Bu_4P^+$ | $[HF_2]^-$ | 1,1 | 1,4600 | 100 | 105 | 0,2 |
| 1b- | E | n-$Bu_4P^+$ | $[HF_2]^-$ | 3,9 | 1,4602 | 120 | 127 | 0,1 |
| 1b- | F | n-$Bu_4P^+$ | $[HF_2]^-$ | 11,9 | 1,4602 | 140 | 152 | 0,1 |
| 1c- | A | n-$Bu_4P^+$ | $CH_3COO^-$ | 6,0 | 1,4610 | 60 | 62 | 0,05 |
| 1c- | B | n-$Bu_4P^+$ | $CH_3COO^-$ | 4,7 | 1,4606 | 60 | 62 | 0,05 |
| 1c- | C | n-$Bu_4P^+$ | $CH_3COO^-$ | 8,1 | 1,4605 | 80 | 82 | 0,04 |
| 1c- | D | n-$Bu_4P^+$ | $CH_3COO^-$ | 9,0 | 1,4608 | 80 | 82 | 0,04 |
| 1c- | E | n-$Bu_4P^+$ | $CH_3COO^-$ | 15,3 | 1,46.09 | 100 | 102 | 0,02 |
| 1c- | F | n-$Bu_4P^+$ | $CH_3COO^-$ | 15,3 | 1,4612 | 100 | 101 | 0,02 |
| 1d- | A | n-$Bu_4P^+$ | $(CH_3)_3CCOO^-$ | 5,1 | 1,4600 | 60 | 63 | 0,05 |
| 1d- | B | n-$Bu_4P^+$ | $(CH_3)_3CCOO^-$ | 6,8 | 1,4609 | 60 | 61 | 0,04 |
| 1d- | C | n-$Bu_4P^+$ | $(CH_3)_3CCOO^-$ | 20,9 | 1,4608 | 80 | 81 | 0,01 |
| 1d- | D | n-$Bu_4P^+$ | $(CH_3)_3CCOO^-$ | 13,4 | 1,4609 | 80 | 81 | 0,03 |

(fortgesetzt)

| Beispiel | | Katalysator- | | | $n_D^{20}$ bei Stopperzugabe | Reaktionstemperatur [°C] | | TOF |
|---|---|---|---|---|---|---|---|---|
| Nr. | | Kation | Anion | Menge [g] | | Start | Max. | |
| 1d- | E | n-$Bu_4P^+$ | $(CH_3)_3CCOO^-$ | 16,6 | 1,4607 | 100 | 100 | 0,02 |
| 1d- | F | n-$Bu_4P^+$ | $(CH_3)_3CCOO^-$ | 16,4 | 1,4604 | 100 | 101 | 0,02 |

Abschließend wurde der Phosphorgehalt des am Ende einer mit identischem Katalysator durchgeführten Serie verbleibenden Destillates bestimmt:

Tabelle 2

| Beispiel- Nr. | | Katalysator- | | P-Gehalt des Destillates [ppm] |
|---|---|---|---|---|
| | | Kation | Anion | |
| 1a- | F | n-$Bu_4P^+$ | OH- | 73 |
| 1b- | F | n-$Bu_4P^+$ | $[HF_2]^-$ | 730 |
| 1c- | F | n-$Bu_4P^+$ | $CH_3COO^-$ | 970 |
| 1d- | F | n-$Bu_4P^+$ | $(CH_3)_3CCOO^-$ | 1200 |

**Beispiele 2a bis 2e -erfindungsgemäß**

Es wurde Verfahren wie in Beispiel 1 angegeben, mit dem Unterschied, dass als Katalysator Salze mit Tris(dimethylamino)-N-[tris(dimethylamino)-lambda$^5$-phosphanyliden]-lambda$^5$-phosphaniminium-Kation, $Me_{12}P_2N^+$) jeweils als ca. 10%ige Lösungen in Isopropanol eingesetzt wurden (3a: Fluorid, 3b: Difluorid, 3c: Trifluorid, 3d: Acetat, 3e: Pivalat). Die Ergebnisse sind Tabelle 3 zu entnehmen. In keinem der Destillate lag der Phosphorgehalt über der Nachweisgrenze (ca. 1 ppm).

Tabelle 3

| Beispiel- Nr. | | Katalysator- | | Reaktionstemperatur [°C] | | TOF |
|---|---|---|---|---|---|---|
| | | Anion | Menge [g] | Start | Max. | |
| 2a- | A | $F^-$ | 1,5 | 60 | 65 | 8,9 |
| 2a- | B | $F^-$ | 1,4 | 60 | 68 | 10,5 |
| 2a- | C | $F^-$ | 1,0 | 80 | 86 | 7,5 |
| 2a- | D | $F^-$ | 0,9 | 80 | 85 | 8,2 |
| 2a- | E | $F^-$ | 0,8 | 100 | 110 | 5,6 |
| 2a- | F | $F^-$ | 0,7 | 100 | 109 | 7,5 |
| 2b- | A | $[HF_2]^-$ | 2,4 | 60 | 65 | 2,0 |
| 2b- | B | $[HF_2]^-$ | 2,2 | 60 | 65 | 2,4 |
| 2b- | C | $[HF_2]^-$ | 2,2 | 80 | 89 | 3,1 |
| 2b- | D | $[HF_2]^-$ | 2,1 | 80 | 85 | 3,5 |
| 2b- | E | $[HF_2]^-$ | 2,0 | 100 | 109 | 3,5 |
| 2b- | F | $[HF_2]^-$ | 1,9 | 100 | 105 | 4,2 |
| 2c- | A | $[H_2F_3]^-$ | 3,5 | 60 | 63 | 2,0 |
| 2c- | B | $[H_2F_3]^-$ | 3,2 | 60 | 63 | 2,5 |

(fortgesetzt)

| Beispiel- Nr. | | Katalysator- | | Reaktionstemperatur [°C] | | TOF |
|---|---|---|---|---|---|---|
| | | Anion | Menge [g] | Start | Max. | |
| 2c- | C | $[H_2F_3]^-$ | 2,9 | 80 | 82 | 2,0 |
| 2c- | D | $[H_2F_3]^-$ | 2,8 | 80 | 82 | 2,1 |
| 2c- | E | $[H_2F_3]^-$ | 2,7 | 100 | 105 | 2,5 |
| 2c- | F | $[H_2F_3]^-$ | 2,6 | 100 | 105 | 2,8 |
| 2d- | A | $CH_3COO^-$ | 2,5 | 60 | 62 | 2,2 |
| 2d- | B | $CH_3COO^-$ | 2,2 | 60 | 61 | 2,4 |
| 2d- | C | $CH_3COO^-$ | 2,2 | 80 | 83 | 2,9 |
| 2d- | D | $CH_3COO^-$ | 2,1 | 80 | 83 | 3,5 |
| 2d- | E | $CH_3COO^-$ | 1,9 | 100 | 106 | 3,9 |
| 2d- | F | $CH_3COO^-$ | 1,8 | 100 | 106 | 4,0 |
| 2e- | A | $(CH_3)_3CCOO^-$ | 3,6 | 60 | 66 | 3,4 |
| 2e- | B | $(CH_3)_3CCOO^-$ | 3,5 | 60 | 66 | 4,2 |
| 2e- | C | $(CH_3)_3CCOO^-$ | 3,1 | 80 | 82 | 5,2 |
| 2e- | D | $(CH_3)_3CCOO^-$ | 2,9 | 80 | 81 | 5,6 |
| 2e- | E | $(CH_3)_3CCOO^-$ | 2,8 | 100 | 101 | 5,9 |
| 2e- | F | $(CH_3)_3CCOO^-$ | 2,8 | 100 | 101 | 6,5 |

**Beispiele 3a bis 3g - erfindungsgemäß**

Es wurde Verfahren wie in Beispiel 1 angegeben, mit dem Unterschied, dass als Katalysator a) N'''-[P,P-Bis(dimethylamino)-N-ethylphosphorimidoyl]-N,N,N',N',N'',N''-hexamethylphosphorimidic triamid als ca. 10%ige Lösung in Diethylenglykoldi-n-butylether und seine nachfolgend näher spezifizierten Säureaddukte eingesetzt wurden: b) Fluorid (HF-Addukt an Neutralbase), c): Difluorid (Addukt von 2 Äquivalenten HF an Neutralbase), d): Trifluorid (Addukt von 3 Äquivalenten HF an Neutralbase), e): Acetat (Essigsäureaddukt an Neutralbase), f): Pivalat (Pivalinsäureaddukt an Neutralbase) g): Hydroxid (Wasseraddukt an Neutralbase). Die Ergebnisse sind Tabelle 4 zu entnehmen. In keinem der Destillate lag der Phosphorgehalt über der Nachweisgrenze (ca. 1 ppm).

Tabelle 4

| Beispiel- Nr. | | Katalysator- | | Reaktionstemperatur [°C] | | TOF |
|---|---|---|---|---|---|---|
| | | Anion | Menge [g] | Start | Max. | |
| 3a- | A | kein (Neutralbase) | 5,0 | 60 | 69 | 0,7 |
| 3a- | B | kein (Neutralbase) | 4,2 | 60 | 62 | 1,4 |
| 3a- | C | kein (Neutralbase) | 4,1 | 80 | 85 | 1,8 |
| 3a- | D | kein (Neutralbase) | 3,9 | 80 | 83 | 2,0 |
| 3a- | E | kein (Neutralbase) | 3,7 | 100 | 105 | 2,5 |
| 3a- | F | kein (Neutralbase) | 3,5 | 100 | 103 | 2,9 |
| 3b- | A | $F^-$ | 5,3 | 60 | 76 | 1,2 |
| 3b- | B | $F^-$ | 5,0 | 60 | 62 | 2,5 |
| 3b- | C | $F^-$ | 4,8 | 80 | 86 | 3,1 |
| 3b- | D | $F^-$ | 4,5 | 80 | 82 | 3,5 |

(fortgesetzt)

| Beispiel- Nr. | | Katalysator- | | Reaktionstemperatur [°C] | | TOF |
|---|---|---|---|---|---|---|
| | | Anion | Menge [g] | Start | Max. | |
| 3b- | E | $F^-$ | 3,9 | 100 | 102 | 3,7 |
| 3b- | F | $F^-$ | 3,5 | 100 | 100 | 3,9 |
| 3c- | A | $[HF_2]^-$ | 3,5 | 60 | 78 | 6,2 |
| 3c- | B | $[HF_2]^-$ | 2,8 | 60 | 75 | 7,5 |
| 3c- | C | $[HF_2]^-$ | 2,5 | 80 | 88 | 8,3 |
| 3c- | D | $[HF_2]^-$ | 2,2 | 80 | 82 | 8,5 |
| 3c- | E | $[HF_2]^-$ | 2,2 | 100 | 105 | 9,5 |
| 3c- | F | $[HF_2]^-$ | 1,8 | 100 | 102 | 8,5 |
| 3d- | A | $[H_2F_3]^-$ | 2,7 | 60 | 62 | 0,8 |
| 3d- | B | $[H_2F_3]^-$ | 3,2 | 60 | 63 | 1,2 |
| 3d- | C | $[H_2F_3]^-$ | 3,2 | 80 | 85 | 1,5 |
| 3d- | D | $[H_2F_3]^-$ | 3,0 | 80 | 84 | 1,8 |
| 3d- | E | $[H_2F_3]^-$ | 2,8 | 100 | 105 | 2,5 |
| 3d- | F | $[H_2F_3]^-$ | 2,8 | 100 | 104 | 3,2 |
| 3e- | A | $CH_3COO^-$ | 3,8 | 60 | 65 | 1,0 |
| 3e- | B | $CH_3COO^-$ | 3,2 | 60 | 63 | 1,8 |
| 3e- | C | $CH_3COO^-$ | 3,2 | 80 | 88 | 1,9 |
| 3e- | D | $CH_3COO^-$ | 2,9 | 80 | 85 | 2,2 |
| 3e- | E | $CH_3COO^-$ | 2,8 | 100 | 105 | 2,8 |
| 3e- | F | $CH_3COO^-$ | 2,5 | 100 | 105 | 3,3 |
| 3f- | A | $(CH_3)_3CCOO^-$ | 4,0 | 60 | 65 | 1,1 |
| 3f- | B | $(CH_3)_3CCOO^-$ | 3,5 | 60 | 63 | 1,7 |
| 3f- | C | $(CH_3)_3CCOO^-$ | 3,2 | 80 | 85 | 1,8 |
| 3f- | D | $(CH_3)_3CCOO^-$ | 2,5 | 80 | 86 | 2,0 |
| 3f- | E | $(CH_3)_3CCOO^-$ | 2,5 | 100 | 110 | 2,2 |
| 3f- | F | $(CH_3)_3CCOO^-$ | 2,4 | 100 | 105 | 2,8 |
| 3g- | A | $OH^-$ | 2,8 | 60 | 68 | 1,8 |
| 3g- | B | $OH^-$ | 2,5 | 60 | 65 | 2,5 |
| 3g- | C | $OH^-$ | 2,2 | 80 | 85 | 3,5 |
| 3g- | D | $OH^-$ | 2,0 | 80 | 88 | 3,8 |
| 3g- | E | $OH^-$ | 1,8 | 100 | 108 | 4,2 |
| 3g- | F | $OH^-$ | 1,6 | 100 | 110 | 4,5 |

**Beispiele 4a bis 4c** - **erfindungsgemäß**

Es wurde Verfahren wie in Beispiel 1 angegeben, mit dem Unterschied, dass als Katalysator jeweils ca. 10%ige Lösungen von 1,1,1,5,5,5-Hexakis(dimethylamino)-3,3-bis{[tris(dimethylamino)-lambda$^5$-phosphanyliden]amino}-1lambda$^5$,5lambda$^5$-triphosphaza-1,4-dien-3-iumfluorid in Benzol (a) bzw. seines HF-Adduktes (b, Difluorid) sowie seines Adduktes mit 2 Äquivalenten HF (c, Trifluorid) zum Einsatz kamen. Die Ergebnisse sind Tabelle 5 zu entnehmen.

In keinem der Destillate lag der Phosphorgehalt über der Nachweisgrenze (ca. 1 ppm).

Tabelle 5

| Beispiel- Nr. | | Katalysator- | | Reaktionstemperatur [°C] | | TOF |
|---|---|---|---|---|---|---|
| | | Anion | Menge [g] | Start | Max. | |
| 4a- | A | $F^-$ | 5,8 | 60 | 60 | 0,6 |
| 4a- | B | $F^-$ | 5,4 | 60 | 60 | 0,8 |
| 4a- | C | $F^-$ | 5,2 | 80 | 81 | 1,2 |
| 4a- | D | $F^-$ | 5,0 | 80 | 81 | 1,4 |
| 4a- | E | $F^-$ | 4,5 | 100 | 100 | 1,8 |
| 4a- | F | $F^-$ | 4,2 | 100 | 100 | 2,2 |
| 4b- | A | $[HF_2]^-$ | 12,8 | 60 | 63 | 0,9 |
| 4b- | B | $[HF_2]^-$ | 11,5 | 60 | 62 | 1,1 |
| 4b- | C | $[HF_2]^-$ | 11,0 | 80 | 83 | 1,4 |
| 4b- | D | $[HF_2]^-$ | 10,5 | 80 | 82 | 1,6 |
| 4b- | E | $[HF_2]^-$ | 10,4 | 100 | 103 | 1,8 |
| 4b- | F | $[HF_2]^-$ | 9,8 | 100 | 104 | 2,2 |
| 4c- | A | $[H_2F_3]^-$ | 7,0 | 60 | 69 | 3,4 |
| 4c- | B | $[H_2F_3]^-$ | 6,5 | 60 | 65 | 4,2 |
| 4c- | C | $[H_2F_3]^-$ | 6,2 | 80 | 82 | 4,8 |
| 4c- | D | $[H_2F_3]^-$ | 5,9 | 80 | 83 | 5,1 |
| 4c- | E | $[H_2F_3]^-$ | 5,8 | 100 | 105 | 5,1 |
| 4c- | F | $[H_2F_3]^-$ | 5,8 | 100 | 102 | 5,3 |

Wie man bei Vergleich der Ergebnisse der Vergleichsversuchsserien 1a bis 1d mit denen der erfindungsgemäßen Versuchsserien 2 - 4 sieht, ist bei Verwendung der erfindungsgemäßen Katalysatoren ganz allgemein eine höhere TOF erzielbar als in den entsprechenden Vergleichsversuchen, die bei ähnlicher Temperatur und identischem Anion durchgeführt wurden. Weiterhin fällt auf, dass bei Erhöhung der Reaktionstemperatur in den erfindungsgemäßen Beispielen die TOF ansteigt und nicht abfällt, wie in den Vergleichsversuchen. In den Destillaten war, wenn überhaupt, nur eine äußerst geringe Mengen an Katalysatorzersetzungsprodukten zu finden. Dies ist nicht dem Umstand geschuldet, dass etwaig gebildete Zersetzungsprodukte aufgrund ihrer möglicherweise geringeren Flüchtigkeit bei der destillativen Aufarbeitung nicht in das Destillat übergehen, wie analytische Untersuchungen der monomerenarmen Harze ergaben, die keinerlei Hinweise auf das Vorliegen derartiger Zersetzungsprodukte lieferten.

Während bei Einsatz der Katalysatoren mit sauerstoffhaltigen Anionen Polyisocyanatharze mit ganz überwiegend Isocyanuratstrukturen neben wenig Uretdion-, Urethan-, Allophanat- und Iminooxadiazindongruppen erhalten wurden, lieferten die im Anion Fluor enthaltenden Katalysatoren Produkte mit Iminooxadiazindionstrukturen neben Isocyanurat- und den anderen vorstehend genannten Isocyanat-Folgeproduktstrukturen. Der Anteil an Iminooxadiazindiongruppen stieg mit höherem Fluoranteil im Anion, d.h. bei Übergang von den einfachen Fluoriden zu Difluoriden und Trifluoriden, signifikant an. Bei höherer Reaktionstemperatur wird er wiederum reduziert, zugunsten der Bildung von Isocyanurat und (vermehrt) Uretdion. Uretonimine wurden in den erfindungsgemäßen Harzen auch bei hoher Reaktionstemperatur nicht gefunden, bei den Produkten aus den Vergleichsversuchen waren sie bei Reaktionstemperaturen oberhalb 80°C spurenweise und oberhalb 100°C eindeutig nachweisbar (ca. 1-3 mol-% bezogen auf die Summe der Isocynatfolgeprodukte). Damit einher gehend lagen die Restmonomergehalte der Uretonimin-freien Harze nie über 0,1% während die der Harze aus den Vergleichsversuchen z.T. deutlich darüber lagen.

**Beispiele 5a bis 5d** - **Vergleichsbeispiele zu CN 102964566**

Jeweils 100 g HDI werden auf 60°C erhitzt und portionsweise mit den nachfolgend genannten Verbindungen:

a) 2-(tert-Butylimino)-N,N-diethyl-1,3-dimethyl-1,3,2lambda$^5$-diazaphosphinan-2-amin

b) N,N,N',N',N",N"-Hexamethyl-N"'-(2,4,4-trimethylpentan-2-yl)phosphorimidic triamid

c) N"'-tert-Butyl-N,N,N',N',N",N"-hexamethylphosphorimidic triamid
bzw.

d) 1-[N-tert-Butyl-P,P-di(pyrrolidin-1-yl)phosphorimidoyl]pyrrolidin

so versetzt, dass nach einsetzender Reaktion, indiziert durch eine leichte Exothermie und/oder einen Anstieg des Brechungsindex', zunächst ohne weitere Katalysatorzugabe bei 60°C unter $n_D$-Kontrolle weiter gerührt wurde und, wenn kein weiterer Anstieg des Brechungsindex mehr zu verzeichnen war, erneut katalysiert wurde.

Bei allen Versuchen war nach kurzem Anstieg des Brechungsindex nach Katalysatorzugabe kein weiterer Reaktionsfortschritt erkennbar (stufenförmiges $n_D$-Zeit-Profil) so dass die Angabe einer Turnoverfrequenz sinnlos ist.

Mittels $^{31}$P-NMR Spektroskopie wurde gefunden, dass sich der zugesetzte "Katalysator" umittelbar nach Kontakt mit dem Isocyanat quantitativ zu den (karzinogenen) Phosphorsäureamiden:

a) N,N-Diethyl-1,3-dimethyl-1,3,2-diazaphosphinan-2-amin-2-oxid

b) und c) N,N,N',N',N",N"-Hexamethylphosphorsäuretriamid
bzw.

d) 1,1'1"-Phosphoryltripyrrolidin umsetzt.

Eine Analyse der strukturellen Zusammensetzung der Reaktionsmischungen hinsichtlich der NCO-Folgeprodukte ergab in allen Fällen über 9 mol-% (bezogen auf die Summe der NCO-Folgeprodukte) liegende Anteile an Uretonimin neben Isocyanurat (Hauptkomponente) Iminooxadiazindion und Uretdion.

Auf eine destillative Aufarbeitung der Reaktionsnsätze wurde wegen des toxikologischen Potenzials der "Katalysator"zersetzungsprodukte verzichtet.

**Beispiele 6a bis 6e - Vergleichsbeispiele zu Säureaddukten an Neutralbasen des Standes der Technik**

Es wurde unter Verwendung folgender Reagenzien

a) Tri-n-butylphosphin-HF-Addukt, 20%ig gelöst in 2-Ethylhexanol

b) Pyridin-HF-Komplex. 40%ig gelöst in iso-PrOH

c) Tri-n-butylamin-HF-Addukt, 25%ig gelöst in in iso-PrOH

d) Tri-n-butylamin-Essigsäure-Addukt, 40%ig gelöst in in iso-PrOH

e) Tri-n-butylamin-Wasser-Addukt, 40%ig gelöst in in iso-PrOH
bzw.

f) dem Addukt des unter Vergleichsbeispiel 5c eingesetzten Katalysators (N"'-tert-Butyl-N,N,N',N',N",N"-hexamethylphosphorimidic triamid) und Pivalinsäure, 40%ig gelöst in THF

verfahren wie in Vergleichsbeispiel 5 angegeben.

In keinem Fall war eine Reaktion der Isocyanatgruppen untereinander zu beobachten - lediglich (bei sehr hohen Mengen an zugesetztem Reagenz) Folgeprodukte der stöchiometrischen Reaktion zwischen Isocyanat und Reagenz bzw. dessen Lösemittel (HF-Addukte, Säureamide, Urethane etc.) ließen sich nachweisen.

**Beispiel 7 erfindungsgemäß**

Es wurde Verfahren wie in Beispiel 1 angegeben, mit dem Unterschied, dass als Katalysator Salze mit Tetrakis[cyclohexyl(methyl)amino]phosphonium-Kation jeweils als ca. 15%ige Lösungen in Isopropanol / Methanol, 1:1, eingesetzt wurden (7a: Fluorid, 7b: Difluorid, 7c: Trifluorid, 7d: Acetat, 7e: Pivalat). Die Ergebnisse sind Tabelle 6 zu

entnehmen. In keinem der Destillate lag der Phosphorgehalt über der Nachweisgrenze (ca. 1 ppm).

Tabelle 6

| Beispiel- Nr. | | Katalysator- | | Reaktionstemperatur [°C] | | TOF |
|---|---|---|---|---|---|---|
| | | Anion | Menge [g] | Start | Max. | |
| 7a- | A | $F^-$ | 4,5 | 60 | 69 | 0,7 |
| 7a- | B | $F^-$ | 3,8 | 60 | 64 | 0,9 |
| 7a- | C | $F^-$ | 3,8 | 80 | 85 | 1,1 |
| 7a- | D | $F^-$ | 3,6 | 80 | 84 | 1,3 |
| 7a- | E | $F^-$ | 3,5 | 100 | 102 | 1,5 |
| 7a- | F | $F^-$ | 3,2 | 100 | 101 | 1,9 |
| 7b- | A | $[HF_2]^-$ | 5,3 | 60 | 66 | 0,5 |
| 7b- | B | $[HF_2]^-$ | 4,5 | 60 | 68 | 0,8 |
| 7b- | C | $[HF_2]^-$ | 5,1 | 80 | 85 | 0,8 |
| 7b- | D | $[HF_2]^-$ | 4,6 | 80 | 84 | 0,9 |
| 7b- | E | $[HF_2]^-$ | 4,2 | 100 | 106 | 1,2 |
| 7b- | F | $[HF_2]^-$ | 3,9 | 100 | 104 | 1,4 |
| 7c- | A | $[H_2F_3]^-$ | 9,3 | 60 | 62 | 0,7 |
| 7c- | B | $[H_2F_3]^-$ | 8,5 | 60 | 61 | 0,8 |
| 7c- | C | $[H_2F_3]^-$ | 8,2 | 80 | 82 | 0,9 |
| 7c- | D | $[H_2F_3]^-$ | 8,1 | 80 | 82 | 1,1 |
| 7c- | E | $[H_2F_3]^-$ | 7,9 | 100 | 104 | 1,5 |
| 7c- | F | $[H_2F_3]^-$ | 6,5 | 100 | 103 | 1,8 |
| 7d- | A | $CH_3COO^-$ | 10,2 | 60 | 60 | 0,4 |
| 7d- | B | $CH_3COO^-$ | 9,5 | 60 | 60 | 0,4 |
| 7d- | C | $CH_3COO^-$ | 9,5 | 80 | 80 | 0,8 |
| 7d- | D | $CH_3COO^-$ | 8,4 | 80 | 80 | 0,9 |
| 7d- | E | $CH_3COO^-$ | 8,2 | 100 | 102 | 0,9 |
| 7d- | F | $CH_3COO^-$ | 8,2 | 100 | 101 | 1,0 |
| 7e- | A | $(CH_3)_3CCOO^-$ | 11,5 | 60 | 61 | 0,5 |
| 7e- | B | $(CH_3)_3CCOO^-$ | 10,9 | 60 | 61 | 0,5 |
| 7e- | C | $(CH_3)_3CCOO^-$ | 10,8 | 80 | 82 | 0,8 |
| 7e- | D | $(CH_3)_3CCOO^-$ | 10,5 | 80 | 81 | 0,9 |
| 7e- | E | $(CH_3)_3CCOO^-$ | 10,5 | 100 | 102 | 1,2 |
| 7e- | F | $(CH_3)_3CCOO^-$ | 10,2 | 100 | 102 | 1,4 |

**Patentansprüche**

**1.** Verfahren zur Modifizierung von Isocyanaten, bei dem mindestens ein monomeres organisches Isocyanat mit einer NCO-Funktionalität > 1 in Gegenwart mindestens eines Katalysators oligomerisiert wird,
**dadurch gekennzeichnet, dass**
der Katalysator mindestens eine Verbindung mit N-P-N-Sequenz umfasst, die ausgewählt ist aus Verbindungen

der Formel I

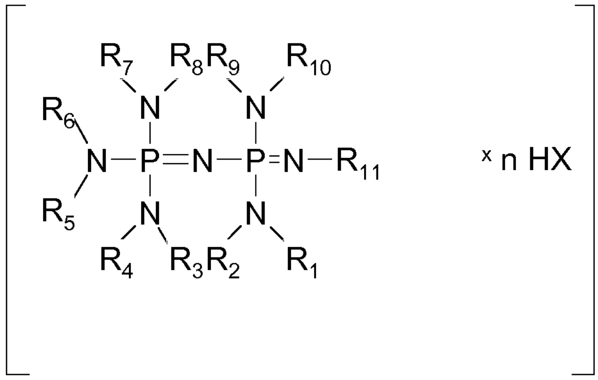

(Formel I),

und/ oder Verbindungen der Formel II

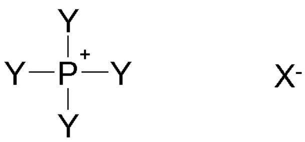

(Formel II)

worin HX für eine Säure mit einem pKs-Wert ≥ 2, $X^-$ für das Anion einer Säure mit einem pKs-Wert ≥ 2 und n für eine ganze oder gebrochene Zahl von 0 bis 20 steht,
worin Y für $R_{12}(R_{13})N$- und/oder einem oder mehreren Substituenten der Struktur der Formel III steht

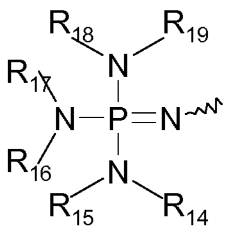

(Formel III)

und
wobei $R_1$ bis $R_{19}$ unabhängig voneinander für gleiche oder verschiedene Substituenten ausgewählt aus $C_1$-$C_{20}$-Alkyl-, $C_1$-$C_{20}$-Cycloalkyl- und $C_6$-$C_{20}$ Arylgruppen stehen oder
wobei $R_1$ und $R_2$, $R_3$ und $R_4$, $R_5$ und $R_6$, $R_7$ und $R_8$, $R_9$ und $R_{10}$, $R_{12}$ und $R_{13}$, $R_{14}$ und $R_{15}$, $R_{16}$ und $R_{17}$, $R_{18}$ und $R_{19}$ unabhängig voneinander für gleiche oder verschiedene Substituenten ausgewählt aus $C_1$-$C_{20}$-Alkylen-, $C_1$-$C_{20}$-Cycloalkylen-, $C_6$-$C_{20}$ Arylengruppen stehen und mit dem P-gebundenen N-Atom einen 3 bis 12-gliedrigen Ring bilden können.

2. Verfahren nach Anspruch 1, **dadurch gekennzeichnet, dass** der 3-12-gliedrige Ring wenigstens ein Heteroatom, ausgewählt aus N, O und S und/ oder einen Substituenten mit einem solchen Heteroatom enthält.

3. Verfahren nach Anspruch 1 oder 2, **dadurch gekennzeichnet, dass** $X^-$ steht für $OH^-$, $F^-$ oder das Anion von

Alkoholen, Phenolen und Alkansäuren und / oder dass HX steht für H2O, HF oder einen Alkohol, ein Phenol oder eine Alkansäure.

4. Verfahren nach einem der vorstehenden Ansprüche, **dadurch gekennzeichnet, dass** die Säure HX und/ oder die zum Anion $X^-$ gehörige Säure einen pKs-Wert ≥ 2,5 aufweist, insbesondere ≥ 3,0, bevorzugt ≥ 3,10.

5. Verfahren nach einem der vorstehenden Ansprüche, **dadurch gekennzeichnet, dass** n für eine ganze oder gebrochene Zahl von 1 bis 10 steht

6. Verfahren nach einem der vorstehenden Ansprüche, **dadurch gekennzeichnet, dass** die Oligomerisierung unter Anwesenheit eines Lösungsmittels und/ oder Additivs durchgeführt wird.

7. Verfahren nach einem der vorstehenden Ansprüche, **dadurch gekennzeichnet, dass** das monomere organische Isocyanat ausgewählt ist aus aliphatischen Diisocyanaten, insbesondere aus Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI) oder Mischungen von diesen.

8. Verfahren nach einem der vorstehenden Ansprüche, **dadurch gekennzeichnet, dass** der Katalysator der Formel I in einer Menge von 0,001 bis 5 mol-%, bezogen auf die Summe der Stoffmengen des eingesetzten monomeren organischen Isocyanates und des Katalysators eingesetzt wird, bevorzugt 0,002 bis 2 mol-% Katalysator.

9. Verfahren nach einem der vorstehenden Ansprüche, **dadurch gekennzeichnet, dass** die Verbindung mit N-P-N-Sequenz ausgewählt ist aus $(Me_2N)_3P{=}N{-}P(NMe_2)_2{=}NEt$, $(Me_2N)_3P{=}N{-}P(NMe_2)_2{=}N^tBu$, oder Mischungen davon, wobei HX insbesondere ausgewählt ist aus HF.

10. Verfahren nach einem der vorstehenden Ansprüche, **dadurch gekennzeichnet, dass** das Kation der Verbindung mit N-P-N-Sequenz gemäß Formel II der folgenden Formel IV entspricht

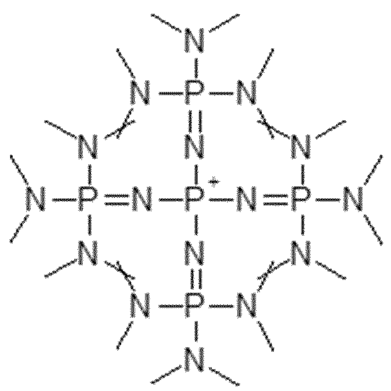

(Formel IV),

und $X^-$ insbesondere ausgewählt ist aus $F^-$, $HF_2^-$, $H_2F_3^-$ oder Mischungen von diesen.

11. Verfahren nach einem der vorstehenden Ansprüche, **dadurch gekennzeichnet, dass** das Verfahren im Temperaturbereich von 0 °C bis + 250 °C durchgeführt wird, bevorzugt 20 bis 180 °C, besonders bevorzugt 40 bis 150 °C.

12. Verfahren nach einem der vorstehenden Ansprüche, **dadurch gekennzeichnet, dass** die Oligomerisierung abgebrochen wird, nachdem 5 bis 80 Gew.-% des eingesetzten monomeren organischen Isocyanats umgesetzt sind, bevorzugt 10 bis 60 Gew.-%.

13. Verfahren nach Anspruch 12, **dadurch gekennzeichnet, dass** die Oligomerisierung abgebrochen wird, indem der Katalysator desaktiviert wird, insbesondere durch Zugabe einer Säure oder eines Säurederivates wie Benzoylchlorid,

eines sauren Esters Phosphor oder Schwefel enthaltender Säuren, diese Säuren selbst, adsorptive Bindung des Katalysators und anschließende Abtrennung durch Filtration oder Kombinationen hiervon.

**14.** Verfahren nach Anspruch 12 oder 13, **dadurch gekennzeichnet, dass** nicht umgesetztes monomeres organisches Isocyanat aus der Reaktionsmischung abgetrennt wird.

**15.** Verwendung eines Katalysators, der eine Verbindung mit N-P-N-Sequenz umfasst, die ausgewählt ist aus Verbindungen der Formel I

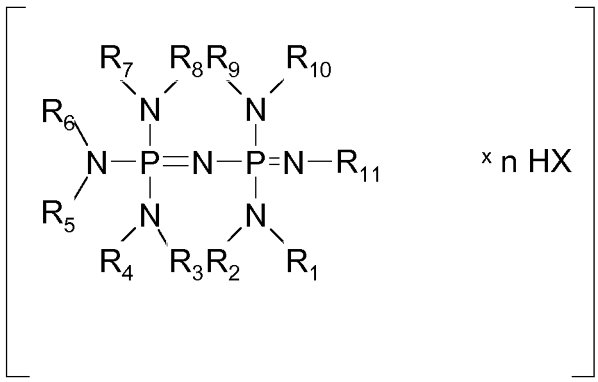

(Formel I),

und/ oder Verbindungen der Formel II

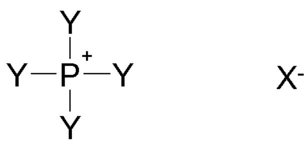

(Formel II)

worin HX für eine Säure mit einem pKs-Wert ≥ 2, $X^-$ für das Anion einer Säure mit einem pKs-Wert ≥ 2 und n für eine ganze oder gebrochene Zahl von 0 bis 20 steht,
worin Y für $R_{12}(R_{13})N$- und/oder einem oder mehreren Substituenten der Struktur der Formel III steht

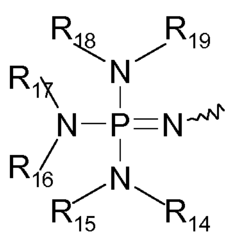

(Formel III)

und
wobei $R_1$ bis $R_{19}$ unabhängig voneinander für gleiche oder verschiedene Substituenten ausgewählt aus $C_1$-$C_{20}$-Alkyl-, $C_1$-$C_{20}$-Cycloalkyl- und $C_6$-$C_{20}$ Arylgruppen stehen oder
wobei $R_1$ und $R_2$, $R_3$ und $R_4$, $R_5$ und $R_6$, $R_7$ und $R_8$, $R_9$ und $R_{10}$, $R_{12}$ und $R_{13}$, $R_{14}$ und $R_{15}$, $R_{16}$ und $R_{17}$, $R_{18}$ und $R_{19}$ unabhängig voneinander für gleiche oder verschiedene Substituenten ausgewählt aus $C_1$-$C_{20}$-Alkylen-,

$C_1$-$C_{20}$-Cycloalkylen-, $C_6$-$C_{20}$ Arylengruppen stehen und mit dem P-gebundenen N-Atom einen 3 bis 12-gliedrigen Ring bilden können,
zur Oligomerisierung von monomeren organischen Isocyanaten mit einer NCO-Funktionalität > 1.

## Claims

**1.** Process for modifying isocyanates, in which at least one monomeric organic isocyanate having an NCO functionality of > 1 is oligomerized in the presence of at least one catalyst,
**characterized in that**
the catalyst comprises at least one compound having an N-P-N sequence, selected from compounds of the formula I

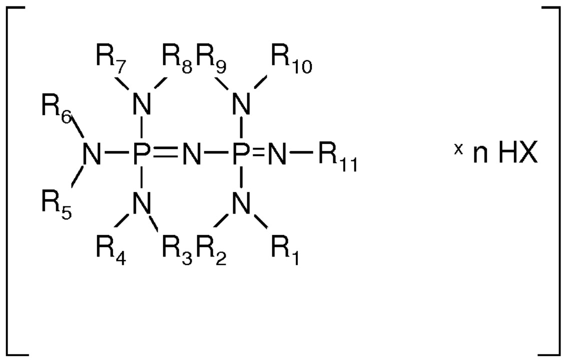

(Formula I)

and/or compounds of the formula II

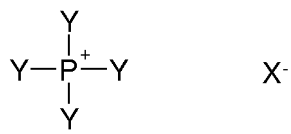

(Formula II)

in which HX is an acid having a pKa ≥ 2, $X^-$ is the anion of an acid having a pKa ≥ 2 and n is an integer or fraction from 0 to 20,
in which Y is $R_{12}(R_{13})N$- and/or one or more substituents of the structure of the formula III

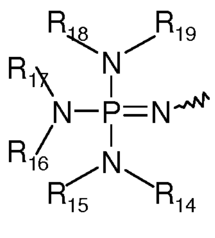

(Formula III)

and
where $R_1$ to $R_{19}$ are independently identical or different substituents selected from $C_1$-$C_{20}$-alkyl, $C_1$-$C_{20}$-cycloalkyl and $C_6$-$C_{20}$-aryl groups or
where $R_1$ and $R_2$, $R_3$ and $R_4$, $R_5$ and $R_6$, $R_7$ and $R_8$, $R_9$ and $R_{10}$, $R_{12}$ and $R_{13}$, $R_{14}$ and $R_{15}$, $R_{16}$ and $R_{17}$, $R_{18}$ and $R_{19}$ are independently identical or different substituents selected from $C_1$-$C_{20}$-alkylene, $C_1$-$C_{20}$-cy-

cloalkylene, $C_6$-$C_{20}$-arylene groups and may, together with the P-bonded N atom, form a 3- to 12-membered ring.

2. Process according to Claim 1, **characterized in that** the 3-12-membered ring contains at least one heteroatom selected from N, O and S and/or a substituent having such a heteroatom.

3. Process according to Claim 1 or 2, **characterized in that** $X^-$ is $OH^-$, F or the anion of alcohols, phenols and alkanoic acids and/or **in that** HX is H2O, HF or an alcohol, a phenol or an alkanoic acid.

4. Process according to any of the preceding claims, **characterized in that** the acid HX and/or the acid corresponding to the anion $X^-$ has a pKa ≥ 2.5, especially ≥ 3.0, preferably ≥ 3.10.

5. Process according to any of the preceding claims, **characterized in that** n is an integer or fraction from 1 to 10.

6. Process according to any of the preceding claims **characterized in that** the oligomerization is conducted in the presence of a solvent and/or additive.

7. Process according to any of the preceding claims, **characterized in that** the monomeric organic isocyanate is selected from aliphatic diisocyanates, especially from hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI), 1,3- and 1,4-bis-(isocyanatomethyl)cyclohexane (H6XDI) and mixtures of these.

8. Process according to any of the preceding claims, **characterized in that** the catalyst of the formula I is used in an amount of 0.001 to 5 mol%, based on the sum total of the molar amounts of the monomeric organic isocyanate used and the catalyst, preferably 0.002 to 2 mol% of catalyst.

9. Process according to any of the preceding claims, **characterized in that** the compound having an N-P-N sequence is selected from $(Me_2N)_3P=N-P(NMe_2)_2=NEt$, $(Me_2N)_3P=N-P(NMe_2)_2=N^tBu$, or mixtures thereof, where HX is especially selected from HF.

10. Process according to any of the preceding claims, **characterized in that** the cation of the compound having an N-P-N sequence of formula II corresponds to the following formula IV:

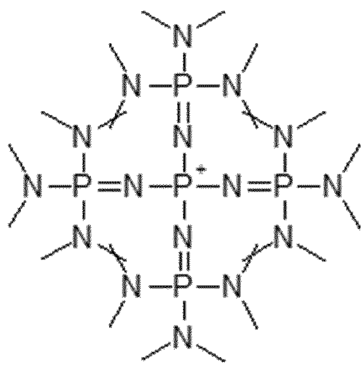

(Formula IV),

and $X^-$ is especially selected from $F^-$, $HF_2^-$, $H_2F_3^-$ and mixtures of these.

11. Process according to any of the preceding claims, **characterized in that** the process is conducted within the temperature range from 0°C to +250°C, preferably 20 to 180°C, more preferably 40 to 150°C.

12. Process according to any of the preceding claims, **characterized in that** the oligomerization is stopped after 5% to 80% by weight of the monomeric organic isocyanate used has been converted, preferably 10% to 60% by weight.

13. Process according to Claim 12, **characterized in that** the oligomerization is stopped by deactivating the catalyst,

especially by adding an acid or an acid derivative such as benzoyl chloride, an acidic ester of phosphorus- or sulfur-containing acids, these acids themselves, adsorptively binding the catalyst and then removing it by filtration or combinations thereof.

**14.** Process according to Claim 12 or 13, **characterized in that** unconverted monomeric organic isocyanate is separated from the reaction mixture.

**15.** Use of a catalyst comprising a compound having an N-P-N sequence, selected from compounds of the formula I

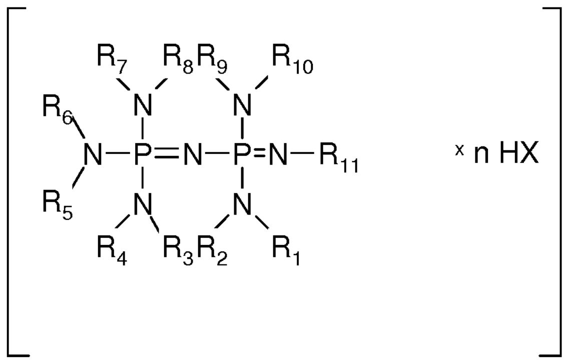

(Formula I)

and/or compounds of the formula II

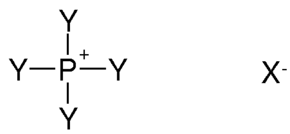

(Formula II)

in which HX is an acid having a pKa ≥ 2, $X^-$ is the anion of an acid having a pKa ≥ 2 and n is an integer or fraction from 0 to 20,
in which Y is $R_{12}(R_{13})N$- and/or one or more substituents of the structure of the formula III

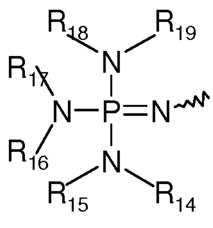

(Formula III)

and
where $R_1$ to $R_{19}$ are independently identical or different substituents selected from $C_1$-$C_{20}$-alkyl, $C_1$-$C_{20}$-cycloalkyl and $C_6$-$C_{20}$-aryl groups or
where $R_1$ and $R_2$, $R_3$ and $R_4$, $R_5$ and $R_6$, $R_7$ and $R_8$, $R_9$ and $R_{10}$, $R_{12}$ and $R_{13}$, $R_{14}$ and $R_{15}$, $R_{16}$ and $R_{17}$, $R_{18}$ and $R_{19}$ are independently identical or different substituents selected from $C_1$-$C_{20}$-alkylene, $C_1$-$C_{20}$-cycloalkylene, $C_6$-$C_{20}$-arylene groups and may, together with the P-bonded N atom, form a 3- to 12-membered ring, for oligomerization of monomeric organic isocyanates having an NCO functionality > 1.

## Revendications

1. Procédé de modification d'isocyanates, selon lequel au moins un isocyanate organique monomère ayant une fonctionnalité NCO > 1 est oligomérisé en présence d'au moins un catalyseur, **caractérisé en ce que** le catalyseur comprend au moins un composé de séquence N-P-N, qui est choisi parmi les composés de formule I

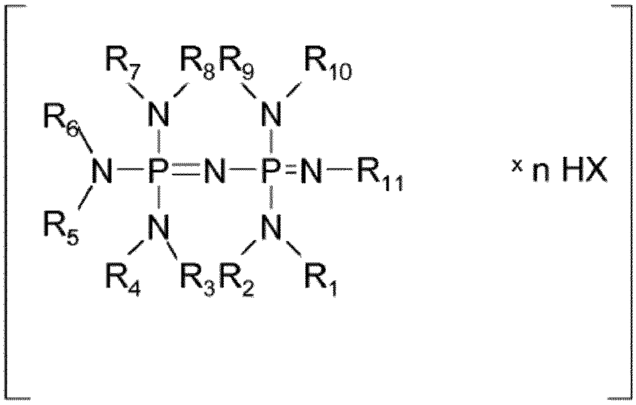

(Formule I)

et/ou les composés de formule II

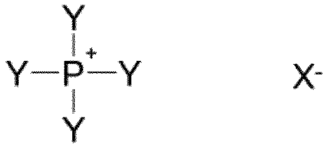

(Formule II)

dans lesquelles HX représente un acide ayant une valeur pKs ≥ 2, $X^-$ représente l'anion d'un acide ayant une valeur pKs ≥ 2 et n représente un nombre entier ou fractionnaire de 0 à 20,
dans lesquelles Y représente $R_{12}(R_{13})N$- et/ou un ou plusieurs substituants de la structure de formule III

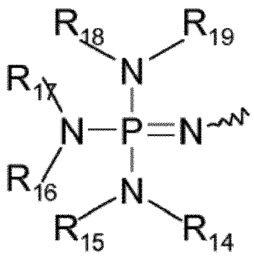

(Formule III)

et

dans lesquelles $R_1$ à $R_{19}$ représentent indépendamment les uns des autres des substituants identiques ou différents choisis parmi les groupes alkyle en $C_1$-$C_{20}$, cycloalkyle en $C_1$-$C_{20}$ et aryle en $C_6$-$C_{20}$, ou
dans lesquelles $R_1$ et $R_2$, $R_3$ et $R_4$, $R_5$ et $R_6$, $R_7$ et $R_8$, $R_9$ et $R_{10}$, $R_{12}$ et $R_{13}$, $R_{14}$ et $R_{15}$, $R_{16}$ et $R_{17}$, $R_{18}$ et $R_{19}$ représentent indépendamment les uns des autres des substituants identiques ou différents choisis parmi les groupes alkylène en $C_1$-$C_{20}$, cycloalkylène en $C_1$-$C_{20}$, arylène en $C_6$-$C_{20}$, et peuvent former un cycle de 3 à 12

chaînons avec l'atome N relié à P.

2. Procédé selon la revendication 1, **caractérisé en ce que** le cycle de 3 à 12 chaînons contient au moins un hétéroatome, choisi parmi N, O et S, et/ou un substituant contenant un tel hétéroatome.

3. Procédé selon la revendication 1 ou 2, **caractérisé en ce que** $X^-$ représente $OH^-$, $F^-$ ou l'anion d'alcools, de phénols et d'acides alcanoïques et/ou **en ce qu'**HX représente $H_2O$, HF ou un alcool, un phénol ou un acide alcanoïque.

4. Procédé selon l'une quelconque des revendications précédentes, **caractérisé en ce que** l'acide HX et/ou l'acide correspondant à l'anion $X^-$ présentent une valeur pKs ≥ 2,5, notamment ≥ 3,0, de préférence ≥ 3,10.

5. Procédé selon l'une quelconque des revendications précédentes, **caractérisé en ce que** n représente un nombre entier ou fractionnaire de 1 à 10.

6. Procédé selon l'une quelconque des revendications précédentes, **caractérisé en ce que** l'oligomérisation est réalisée en présence d'un solvant et/ou d'un additif.

7. Procédé selon l'une quelconque des revendications précédentes, **caractérisé en ce que** l'isocyanate organique monomère est choisi parmi les diisocyanates aliphatiques, notamment parmi le diisocyanate d'hexaméthylène (HDI), le 1,5-diisocyanate de 2-méthylpentane, le diisocyanate de 2,4,4-triméthyl-1,6-hexane, le diisocyanate de 2,2,4-triméthyl-1,6-hexane, le diisocyanate de 4-isocyanatométhyl-1,8-octane, l'isocyanate de 3(4)-isocyanatométhyl-1-méthylcyclohexyle (IMCI), le diisocyanate d'isophorone (IPDI), le 1,3- et 1,4-bis(isocyanatométhyl)benzène (XDI), le 1,3- et 1,4-bis(isocyanatométhyl)cyclohexane (H6XDI) ou les mélanges de ceux-ci.

8. Procédé selon l'une quelconque des revendications précédentes, **caractérisé en ce que** le catalyseur de formule I est utilisé en une quantité de 0,001 à 5 % en moles, par rapport à la somme des quantités de matière de l'isocyanate organique monomère utilisé et du catalyseur, de préférence de 0,002 à 2 % en moles de catalyseur.

9. Procédé selon l'une quelconque des revendications précédentes, **caractérisé en ce que** le composé de séquence N-P-N est choisi parmi $(Me_2N)_3P$=N-$P(NMe_2)_2$=NEt, $(Me_2N)_3P$=N-$P(NMe_2)_2$=$N^tBu$, ou leurs mélanges, HX étant notamment choisi parmi HF.

10. Procédé selon l'une quelconque des revendications précédentes, **caractérisé en ce que** le cation du composé de séquence N-P-N selon la formule II correspond à la formule IV suivante :

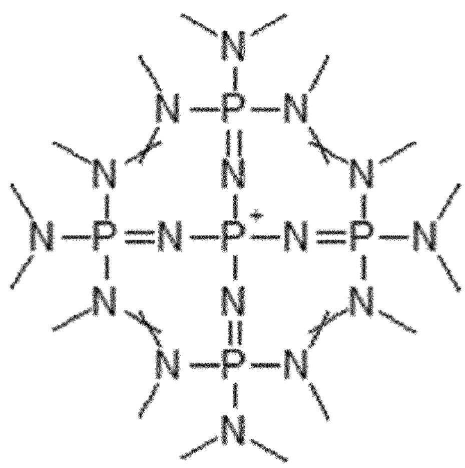

(Formule IV)

et $X^-$ est notamment choisi parmi $F^-$, $HF_2^-$, $H_2F_3^-$ ou les mélanges de ceux-ci.

11. Procédé selon l'une quelconque des revendications précédentes, **caractérisé en ce que** le procédé est réalisé

dans la plage de température allant de 0 °C à +250 °C, de préférence de 20 à 180 °C, de manière particulièrement préférée de 40 à 150 °C.

**12.** Procédé selon l'une quelconque des revendications précédentes, **caractérisé en ce que** l'oligomérisation est interrompue après la transformation de 5 à 80 % en poids de l'isocyanate organique monomère utilisé, de préférence 10 à 60 % en poids.

**13.** Procédé selon la revendication 12, **caractérisé en ce que** l'oligomérisation est interrompue par désactivation du catalyseur, notamment par ajout d'un acide ou d'un dérivé d'acide tel que le chlorure de benzoyle, d'un ester acide d'acides contenant du phosphore ou du soufre, de ces acides eux-mêmes, liaison par adsorption du catalyseur, puis séparation par filtration ou leurs combinaisons.

**14.** Procédé selon la revendication 12 ou 13, **caractérisé en ce que** l'isocyanate organique monomère non réagi est séparé du mélange réactionnel.

**15.** Utilisation d'un catalyseur, qui comprend un composé de séquence N-P-N, qui est choisi parmi les composés de formule I

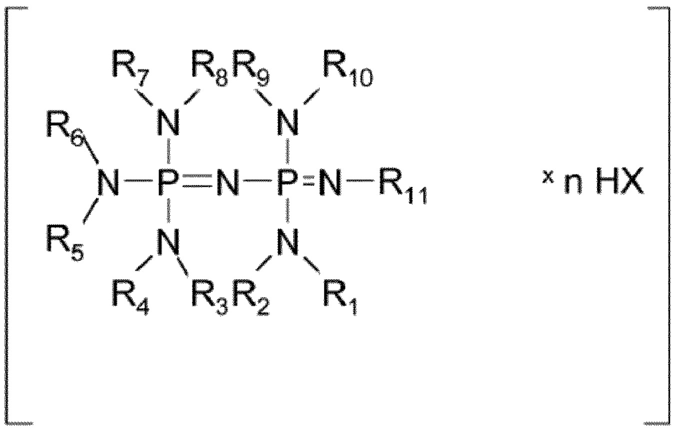

(Formule I)

et/ou les composés de formule II

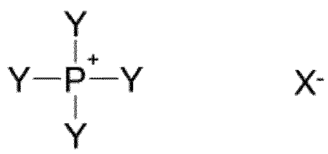

(Formule II)

dans lesquelles HX représente un acide ayant une valeur pKs ≥ 2, $X^-$ représente l'anion d'un acide ayant une valeur pKs ≥ 2 et n représente un nombre entier ou fractionnaire de 0 à 20,
dans lesquelles Y représente $R_{12}(R_{13})N$- et/ou un ou plusieurs substituants de la structure de formule III

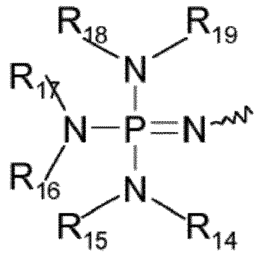

(Formule III)

et

dans lesquelles $R_1$ à $R_{19}$ représentent indépendamment les uns des autres des substituants identiques ou différents choisis parmi les groupes alkyle en $C_1$-$C_{20}$, cycloalkyle en $C_1$-$C_{20}$ et aryle en $C_6$-$C_{20}$, ou

dans lesquelles $R_1$ et $R_2$, $R_3$ et $R_4$, $R_5$ et $R_6$, $R_7$ et $R_8$, $R_9$ et $R_{10}$, $R_{12}$ et $R_{13}$, $R_{14}$ et $R_{15}$, $R_{16}$ et $R_{17}$, $R_{18}$ et $R_{19}$ représentent indépendamment les uns des autres des substituants identiques ou différents choisis parmi les groupes alkylène en $C_1$-$C_{20}$, cycloalkylène en $C_1$-$C_{20}$, arylène en $C_6$-$C_{20}$, et peuvent former un cycle de 3 à 12 chaînons avec l'atome N relié à P,

pour l'oligomérisation d'isocyanates organiques monomères ayant une fonctionnalité NCO > 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 962455 A1
- EP 962454 A1
- EP 896009 A1
- EP 798299 A1
- EP 447074 A1
- EP 379914 A1
- EP 339396 A1
- EP 315692 A1
- EP 295926 A1
- EP 235388 A1
- EP 1318160 A1
- US 5260436 A
- CN 102964566
- EP 2415795 A1
- EP 896009 A


### In der Beschreibung aufgeführte Nicht-Patentliteratur


- **H. J. LAAS et al.** *J. Prakt. Chem.,* 1994, vol. 336, 185 ff
- *Chem. Eur. J.,* 2009, vol. 15, 5200-5202
- *In J. Org. Chem.,* 2010, vol. 75, 5308-5311
- **D. WENDISCH ; H. REIFF ; D. DIETERICH.** *Die Angewandte Makromolekulare Chemie,* 1986, vol. 141, 173-183
- *Chem. Eur. J.,* 2006, vol. 12, 429-437